# EUROPÄISCHE PATENTSCHRIFT

(11) **EP 3 695 395 B1**
(45) Veröffentlichungstag und Bekanntmachung des Hinweises auf die Patenterteilung: **11.02.2026**
(21) Anmeldenummer: 18768809.8
(22) Anmeldetag: 03.09.2018
(51) Int. Cl.: G08G 1/16, B60R 1/00, B60R 1/27, B60R 1/28

(54) **VERFAHREN ZUM DARSTELLEN EINER UMGEBUNG EINES FAHRZEUGS**
METHOD FOR REPRODUCING THE SURROUNDINGS OF A VEHICLE
PROCÉDÉ DE REPRÉSENTATION D'UN ENVIRONNEMENT D'UN VÉHICULE

(30) Priorität: 11.10.2017 DE 102017218074
(43) Veröffentlichungstag der Anmeldung: 19.08.2020
(73) Patentinhaber: Robert Bosch GmbH, 70442 Stuttgart (DE)
(72) Erfinder: ESPARZA GARCIA, Jose Domingo, 70178 Stuttgart (DE); PANKEY, Cain, 74363 Gueglingen (DE); CANO, Raphael, 70180 Stuttgart (DE)
(86) Internationale Anmeldenummer: PCT/EP2018/073611
(87) Internationale Veröffentlichungsnummer: WO 2019/072455

(56) Entgegenhaltungen:
- EP-A1- 1 179 958
- EP-A1- 2 555 519
- DE-A1- 102008 046 214
- DE-A1- 102011 082 475

## Beschreibung

### Stand der Technik

Die vorliegende Erfindung betrifft ein Verfahren zum Darstellen einer Umgebung eines Fahrzeugs, insbesondere zum Anzeigen von Hindernissen in der Umgebung des Fahrzeugs. Weiterhin betrifft die Erfindung ein Computerprogrammprodukt zum Durchführen eines solchen Verfahrens. Zuletzt betrifft die Erfindung ein Steuergerät für ein Fahrzeug, das zum Ausführen eines solchen Verfahrens, insbesondere zum Ausführen eines Computerprogrammprodukts, ausgebildet ist.

Das Dokument DE 10 2008 046 214 A1 offenbart ein Verfahren zur Überwachung einer Umgebung eines Fahrzeuges, bei dem die Umgebung mittels wenigstens einer Bilderfassungseinheit erfasst wird, wobei aus mittels der wenigstens einen Bilderfassungseinheit erfassten Einzelbildern anhand einer Bildverarbeitungseinheit ein Gesamtbild erzeugt und mittels einer Anzeigeeinheit ausgegeben wird.

Die Schrift DE 10 2011 082 475 A1 offenbart ein Fahrerassistenzsystem zur Unterstützung eines Fahrers in kollisionsrelevanten Situationen eines Fahrzeugs, wobei das Fahrerassistenzsystem einen Sensor zur Entfernungsmessung, eine Auswerteeinheit und Mittel zum Bereithalten von Daten bezüglich der Oberflächengeometrie des Fahrzeugs umfasst.

Die Schrift EP 2 555 519 A1 offenbart eine Fahrzeugperipheriebeobachtungsvorrichtung, umfassend eine Vielzahl von Kameras zum Abbilden eines Bereichs, der eine Straßenoberfläche der Fahrzeugperipherie beinhaltet, einen Bildprozessor zum Anzeigen der unter Verwendung der Vielzahl von Kameras aufgenommenen Bilder auf einem Monitor, und eine Hinderniserfassungseinrichtung zum Erfassen eines Hindernisses in der Fahrzeugperipherie.

Aus dem Stand der Technik sind Systeme bekannt, die dem Fahrer eine bildliche Repräsentation der Umgebung seines Fahrzeugs anzeigen können. Solche Systeme werden auch Surround-View-Systeme (SVS) genannt. Bei derartigen Surround-View-Systemen erfolgt insbesondere eine Kombination aus einer Vielzahl von unterschiedlichen Sensorsignalen, die dem Fahrer allesamt angezeigt werden, so dass dem Fahrer ein Maximum an Informationen bereitgestellt werden kann. Diese Informationen werden beispielsweise aus Signalen von Videosensoren, Radarsensoren, Lidarsensoren, Ultraschallsensoren oder ähnlichen Umfeldsensoren ermittelt. Die Informationen können außerdem mit bereits gespeicherten, insbesondere in einer Cloud vorhandenen, Daten zusammengeführt werden. Im Ergebnis zeigt ein Surround-View-System eine große Vielzahl von Informationen. Dabei besteht die Gefahr, dass der Fahrer eines Fahrzeugs, das ein Surround-View-System aufweist, aufgrund der großen Anzahl von Informationen Gefahren, wie insbesondere das Annähern des Fahrzeugs an ein Hindernis, nicht rechtzeitig erkennt.

### Offenbarung der Erfindung

Das erfindungsgemäße Verfahren erlaubt ein rasches und sicheres Erkennen von Gefahrensituationen aufgrund von Annäherung des Fahrzeugs an ein Hindernis. Dies wird dadurch erreicht, dass zusätzlich zu einer ersten Anzeige, die dem Fahrer einen Überblick über die Umgebung liefert, eine zweite Darstellung angezeigt wird, die dem Fahrer speziell auf die Gefahr des sich nähernden Hindernisses hinweist.

Das erfindungsgemäße Verfahren zum Darstellen einer Umgebung eines Fahrzeugs umfasst die folgenden Schritte, die insbesondere in der nachfolgend aufgeführten Reihenfolge ausgeführt werden:
Zunächst erfolgt ein Erfassen einer Umgebung des Fahrzeugs sowie ein Ermitteln von Hindernissen in der Umgebung des Fahrzeugs mittels Umfeldsensoren des Fahrzeugs. Umfeldsensoren sind insbesondere optische oder akustische Sensoren, um Hindernisse in der Umgebung des Fahrzeugs zu erkennen. Dabei kann es sich insbesondere um Kamerasysteme, Ultraschallsysteme und/oder Radarsysteme sowie ähnliche Systeme handeln. Besonders vorteilhaft erfolgt das Erfassen der Umgebung mittels zumindest einer Kamera, um einem Fahrer des Fahrzeugs bildliche Repräsentationen der Umgebung anzeigen zu können. Durch das Ausführen des Schritts des Erfassens ist somit einerseits bekannt, in welcher Umgebung sich das Fahrzeug befindet, andererseits sind Hindernisse in der Umgebung des Fahrzeugs ermittelt. Anschließend erfolgt ein Schritt des Anzeigens einer ersten Darstellung. Die erste Darstellung umfasst eine Repräsentation der Umgebung mit den Hindernissen und eine Repräsentation des Fahrzeugs auf einer Anzeigevorrichtung. Die Repräsentation des Fahrzeugs ist insbesondere eine Animation des eigenen Fahrzeugs, die mit der Repräsentation der Umgebung und den Hindernissen überlagert wird. Die Repräsentation der Umgebung und der Hindernisse ist besonders vorteilhaft eine bildliche Repräsentation, die aus denjenigen Daten, die im zuvor beschriebenen Schritt des Erfassens und Ermittelns gewonnen wurde, generiert wird. Die Anzeigevorrichtung stellt insbesondere eine Schnittstelle zu dem Fahrer des Fahrzeugs dar. Die Anzeigevorrichtung ist vorteilhafterweise eine Anzeigevorrichtung oder ein Monitor und ist beispielsweise in einem Inneren des Fahrzeugs, wie in der Mittelkonsole des Fahrzeugs, angebracht. Des Weiteren erfolgt ein Feststellen einer Annäherung des Fahrzeugs an ein ermitteltes Hindernis durch die ein vordefinierter Abstand zu dem Hindernis unterschritten ist. Somit wird festgestellt, dass sich eine Entfernung zwischen Fahrzeug und Hindernis verringert und das Fahrzeug sich bereits nahe an dem Hindernis befindet. Dadurch besteht grundsätzlich die Gefahr, dass das Fahrzeug mit dem Hindernis kollidiert. Dies kann insbesondere auch an unübersichtlichen Stellen, wie an seitlichen Kotflügeln des Fahrzeugs, der Fall sein. Solche Annäherungen an Hindernisse sollen den Fahrer zuverlässig und eindeutig dargestellt werden. Daher erfolgt ein Schritt des Anzeigens einer zweiten Darstellung mit einem gegenüber der ersten Darstellung vergrößerten Ausschnitt der Repräsentation der Umgebung mit den Hindernissen. Außerdem umfasst die zweite Darstellung wiederum eine Repräsentation des Fahrzeugs. Die Repräsentation des Fahrzeugs ist insbesondere dieselbe wie bei der ersten Darstellung. Sollte die zweite Darstellung aus einer anderen Perspektive wie in der ersten Darstellung dargestellt sein, so wird vorteilhafterweise die Repräsentation des Fahrzeugs entsprechend angepasst. Das Anzeigen der zweiten Darstellung erfolgt wiederum auf einer Anzeigevorrichtung, auf der auch bereits die erste Darstellung angezeigt wurde. Der Ausschnitt aus der Repräsentation der Umgebung mit den Hindernissen, der in der zweiten Darstellung angezeigt wird, entspricht insbesondere demjenigen Bereich der Umgebung und des Fahrzeugs, an dem die Annäherung des Fahrzeugs an das Hindernis festgestellt wurde. Somit erfolgt ein Hervorheben derjenigen Stelle, an der sich das Fahrzeug einem Hindernis annähert. Die Aufmerksamkeit des Fahrers des Fahrzeugs wird somit auf besagte Annäherung gelenkt, so dass der Fahrer entsprechende Maßnahmen ergreifen kann, um eine Kollision zwischen Fahrzeug und Hindernis zu vermeiden. Auf der Anzeigevorrichtung wird somit eine große Vielzahl von Informationen dargestellt, wobei durch das zuvor beschriebene Verfahren besonders relevante Informationen explizit herausgestellt werden. Somit besteht nicht die Gefahr, dass die Information, dass sich das Fahrzeug an ein anderes Hindernis annähert, aufgrund der Vielzahl von dargestellten Informationen untergeht und der Fahrer besagte Information nicht bemerkt. Dadurch ist eine Sicherheit beim Betrieb des Fahrzeugs erhöht, da die Gefahr von Beschädigungen von Hindernissen in der Umgebung des Fahrzeugs sowie des eigenen Fahrzeugs selbst verringert ist.

Erfindungsgemäß zeigen die erste Darstellung und die zweite Darstellung Bilder aus unterschiedlichen virtuellen Perspektiven auf ein dreidimensionales Modell der Umgebung. Das dreidimensionale Modell der Umgebung wurde anhand der erfassten Umgebung und der ermittelten Hindernisse generiert. Das Erfassen der Umgebung und das Ermitteln von Hindernissen wurde zuvor bereits beschrieben. Durch die unterschiedlichen virtuellen Perspektiven kann somit ein Fokus des Fahrers unmittelbar auf denjenigen Bereich gelenkt werden, an dem sich das Fahrzeug einem Hindernis nähert. Somit ist sichergestellt, dass der Fahrer eindeutig erkennt, dass sich das Fahrzeug einem Hindernis annähert.

Erfindungsgemäß wird die zweite Darstellung durch einen Wechsel der virtuellen Perspektive und einer Veränderung eines Zooms aus der ersten Darstellung erzeugt. Dies wird erfindungsgemäß durch einen virtuellen Kameraschwenk erreicht, indem dem Fahrer des Fahrzeugs auf der Anzeigevorrichtung eine Animation gezeigt wird, die dem Perspektivenwechsel entspricht. Das auf der Anzeigevorrichtung dargestellte Bild wird somit derart verändert, dass der Fahrer den Eindruck bekommt, dass die Perspektive zu der Gefahrenstelle wandert, d.h., dass die Perspektive zu derjenigen Stelle des Fahrzeugs wandert, an der sich das Hindernis dem Fahrzeug nähert. Die Aufmerksamkeit des Fahrers wird somit unmittelbar an besagte Gefahrenstelle gelenkt. Dies wird insbesondere dadurch unterstützt, dass die zweite Darstellung direkt aus der ersten Darstellung hervorgeht.

Die Unteransprüche haben bevorzugte Weiterbildungen der Erfindung zum Inhalt.

In einer weiteren Alternative sind die erste Darstellung und die zweite Darstellung separate Darstellungen. Dies hat den Vorteil, dass die erste Darstellung unverändert bestehen bleibt, während die zweite Darstellung lediglich zum Hervorheben besagter Annäherungen des Fahrzeugs an ein Hindernis erfolgt. Durch das separate Darstellen ist insbesondere auch ermöglicht, mehrere Stellen, an denen sich das Fahrzeug einem Hindernis annähert, entsprechend zu visualisieren. Dies ist insbesondere dann vorteilhaft bei Einparkvorgängen, wenn das Fahrzeug an einer Vielzahl von Bereichen in die Nähe von Hindernissen, d.h. von anderen parkenden Fahrzeugen und/oder von Begrenzungswänden, gelangt.

Die zweite Darstellung wird auf der Anzeigevorrichtung vorteilhafterweise derart dargestellt, dass diese zumindest einen Teilbereich der ersten Darstellung überlagert. Somit hat der Fahrer des Fahrzeugs den Eindruck, dass ihm durch die Anzeigevorrichtung eine Mitteilung übersandt wird. Diese Mitteilung erfolgt in einem separaten Fenster, dass die ursprüngliche Anzeige, das bedeutet die erste Darstellung, überlagert. Somit wird dem Fahrer der Eindruck vermittelt, dass die zweite Darstellung von höherer Priorität ist als die erste Darstellung. Der Fahrer kann unmittelbar und eindeutig erkennen, dass sich das Fahrzeug einem Hindernis annähert.

In einer anderen Alternative erfolgt die Anzeige von erster Darstellung und zweiter Darstellung nebeneinander auf der Anzeigevorrichtung. Dazu wird insbesondere die erste Darstellung skaliert, um auf der Anzeigevorrichtung Platz für die zweite Darstellung zu schaffen. Wird die erste Darstellung nicht auf der Anzeigevorrichtung derart dargestellt, dass diese die gesamte Anzeigevorrichtung in Beschlag nimmt, so ist ein solches Skalieren auch nicht notwendig. Durch diese Alternative wird erreicht, dass keinerlei Überlagerungen vorhanden sind. Somit gehen keine Informationen durch die Anzeige der zweiten Darstellung verloren, wie dies bei einer Überlagerung der zweiten Darstellung wäre. Der Fahrer des Fahrzeugs kann die erste Darstellung weiterhin vollständig sehen, wie dies auch vor der Anzeige der zweiten Darstellung der Fall war.

In der ersten Darstellung und/oder in der zweiten Darstellung sind die Repräsentationen von Hindernissen, dem sich das Fahrzeug nähert, vorteilhafterweise hervorgehoben. Dies kann insbesondere derart der Fall sein, dass besagte Hindernisse in der Repräsentation mit einem Rahmen versehen werden, wobei der Rahmen vorteilhafterweise blinkend ausgestaltet sein kann. Ebenso können die Hindernisse in der Repräsentation mit einer Signalfarbe überlagert sein, wobei besagten Signalfarbe wiederum blinkend ausgestaltet sein kann. Andere Maßnahmen sind ebenso möglich. Auf diese Weise wird dem Fahrer explizit gezeigt, wo sich eine Kollision zwischen Fahrzeug und Hindernis anbahnen könnte. Dem Fahrer wird somit explizit die Möglichkeit gegeben, durch frühzeitiges Erkennung einer möglichen Kollision entsprechende Fahrmanöver zum Vermeiden besagter Kollision einzuleiten.

Die Erfindung betrifft außerdem Computerprogrammprodukt. Das Computerprogrammprodukt umfasst Instruktionen, welche, wenn sie auf einer Auswerteeinheit ausgeführt werden, die Auswerteeinheit veranlassen, die Schritte des zuvor beschriebenen Verfahrens durchzuführen. Eine Auswerteeinheit kann insbesondere ein Steuergerät eines Fahrzeugs sein. Besagtes Steuergerät ist dazu lediglich mit Umfeldsensoren und einer Anzeigevorrichtung zu verbinden.

Schließlich betrifft die Erfindung ein Steuergerät für ein Fahrzeug. Das Steuergerät umfasst zumindest eine Schnittstelle zum Anbinden von Umfeldsensoren. Außerdem kann an die Schnittstelle eine Anzeigevorrichtung angeschlossen werden. Somit ist das Steuergerät insbesondere in der Lage, die Umfeldsensoren anzusteuern, um eine Umgebung des Fahrzeugs zu erfassen und um Hindernisse in der Umgebung des Fahrzeugs zu ermitteln. Das Steuergerät ist somit vorteilhafterweise eingerichtet, ein Computerprogrammprodukt wie zuvor beschrieben auszuführen, oder ein Verfahren wie zuvor beschrieben durchzuführen. Das Steuergerät kann somit einem Fahrer des Fahrzeugs Hilfestellungen beim Navigieren des Fahrzeugs durch Umgebungen mit Hindernissen geben, um somit eine Gefahr von Kollisionen zwischen Fahrzeug und Hindernissen zu vermeiden.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Ansicht eines Ablaufplans eines Verfahrens gemäß einem Ausführungsbeispiel der Erfindung,
- Figur 2: eine schematische Ansicht eines Fahrzeugs mit einem Steuergerät gemäß einem Ausführungsbeispiel der Erfindung,
- Figur 3: eine erste schematische Wiedergabe einer ersten Darstellung bei Durchführung des Verfahrens gemäß einem Ausführungsbeispiel der Erfindung,
- Figur 4: eine zweite schematische Wiedergabe der ersten Darstellung bei Durchführung des Verfahrens gemäß dem Ausführungsbeispiel der Erfindung, Neue Beschreibungsseite 8 des Hauptantrags (Reinschrift)
- Figur 5: eine schematische Wiedergabe von Teilschritten einer Veränderung einer virtuellen Perspektive bei Wechsel von der ersten Darstellung zu einer zweiten Darstellung bei Durchführung des Verfahrens gemäß einem Ausführungsbeispiel der Erfindung,
- Figur 6: eine erste schematische Wiedergabe einer Kombination von erster Darstellung und zweiter Darstellung bei Durchführung des Verfahrens gemäß dem Ausführungsbeispiel der Erfindung,
- Figur 7: eine zweite schematische Wiedergabe der Kombination von erster Darstellung und zweiter Darstellung bei Durchführung des Verfahrens gemäß dem Ausführungsbeispiel der Erfindung, und
- Figur 8: eine dritte schematische Wiedergabe der Kombination von erster Darstellung und zweiter Darstellung bei Durchführung des Verfahrens gemäß einem Ausführungsbeispiel, das nicht Teil der beanspruchten Erfindung ist.

### Ausführungsformen der Erfindung

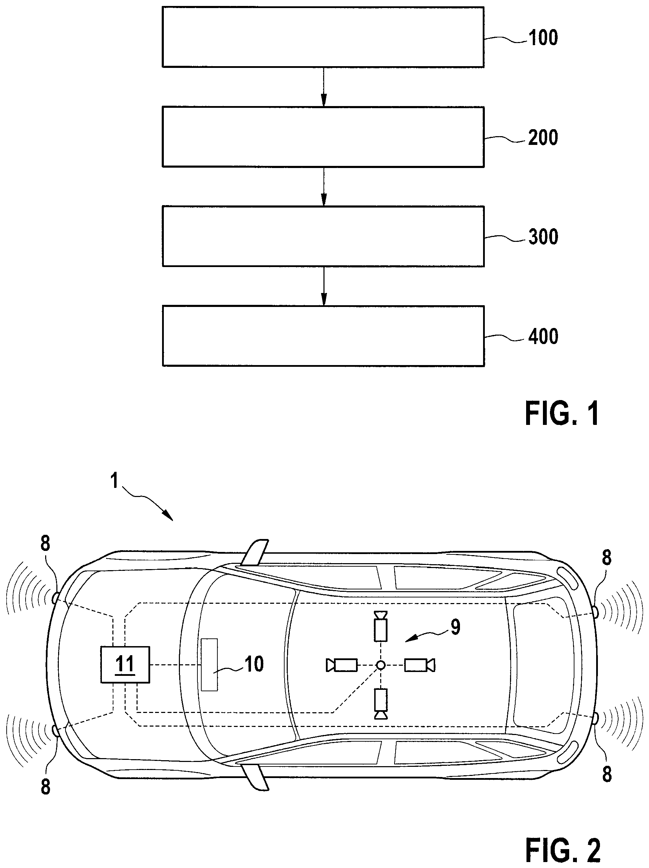

Figur 1 zeigt schematisch einen Ablaufplan eines Verfahrens gemäß einem Ausführungsbeispiel der Erfindung. Der Ablaufplan umfasst die Schritte des Erfassens einer Umgebung und Ermittelns von Hindernissen 100, des Anzeigens einer ersten Darstellung 200, des Feststellens einer Annäherung des Fahrzeugs an ein Hindernis 300, sowie des Anzeigens einer zweiten Darstellung 400. Diese Schritte werden nachfolgend erklärt, wobei Bezug auf das in Figur 2 gezeigte Fahrzeug 1 mit einem Steuergerät 11 genommen wird. Das Steuergerät 11 dient zum Ausführen des in Figur 1 gezeigten Verfahrens, wobei das Steuergerät 11 mit einer Anzeigevorrichtung 10 verbunden ist. Somit kann das Steuergerät 11 die Anzeigevorrichtung 10 veranlassen, Darstellungen anzuzeigen. Außerdem ist das Steuergerät 11 mit Umfeldsensoren 8, 9 verbunden, wobei die Umfeldsensoren 8, 9 Ultraschallsensoren 8 sowie ein Kamerasystem 9 umfassen. Mit dem Kamerasystem 9 ist insbesondere ein dreidimensionales Erfassen der Umgebung des Fahrzeugs 1 ermöglicht. Über die Ultraschallsensoren 8 lassen sich insbesondere kurze bis mittlere Abstände sehr genau detektieren.

Zum Durchführen des Verfahrens gemäß dem Ausführungsbeispiel erfolgt zunächst ein Erfassen 100 einer Umgebung des Fahrzeugs 1 zusammen mit einem Ermitteln von Hindernissen in der Umgebung des Fahrzeugs. Dies erfolgt mithilfe der Umfeldsensoren 8, 9, so dass insbesondere eine bildliche Repräsentation, d.h., eine Repräsentation umfassend Texturen, der Umgebung des Fahrzeugs 1 vorliegt. Dies bedeutet, dass einem Benutzer, der insbesondere ein Fahrer des Fahrzeugs ist, ein hochgenaues Bild der Umgebung angezeigt werden kann.

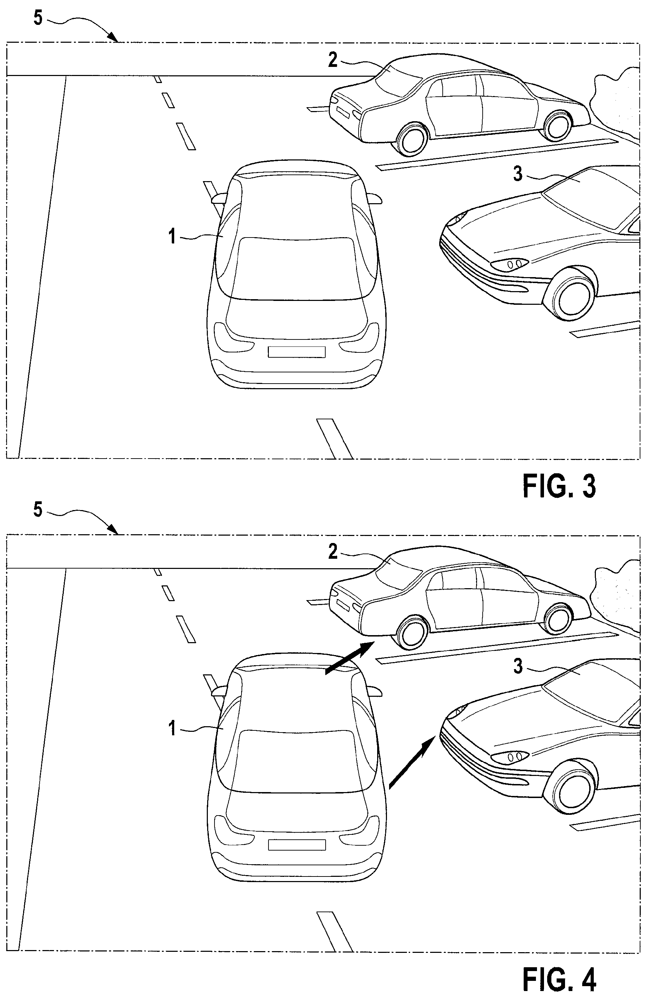

Anschließend erfolgt ein Anzeigen 200 einer ersten Darstellung 5, wobei eine beispielshafte erste Darstellung 5 in Figur 3 sowie in Figur 4 gezeigt ist. Aufgrund des Kamerasystems 9 ist ermöglicht, ein dreidimensionales Modell der Umgebung zu generieren, wobei zusätzlich die Abstandsinformationen der Ultraschallsensoren 8 verwendet werden. Dies bedeutet, dass die von dem Kamerasystem 9 erfassten Texturen anhand der Abstandsinformationen zu einem dreidimensionalen Modell aufbereitet werden können, wobei dem Fahrer des Fahrzeugs 1 Hindernisse angezeigt werden können, indem der Fahrer aus einer virtuellen Perspektive auf das dreidimensionale Modell umfassend eine virtuelle Darstellung des Fahrzeugs 1 sowie der Umgebung blickt.

In den Figuren 3 und 4 ist beispielhaft eine Parksituation gezeigt. Der Fahrer des Fahrzeugs 1 möchte in einen Parkplatz einparken. Der Parkplatz wird begrenzt durch ein erstes Hindernis 2 und ein zweites Hindernis 3, wobei es sich bei dem ersten Hindernis 2 und dem zweiten Hindernis 3 um benachbart parkende Fahrzeuge handelt. In der ersten Darstellung erkennt der Fahrer diese Fahrzeuge und kann somit dem ersten Hindernis 2 und dem zweiten Hindernis 3 ausweichen. Wie in Figur 4 markiert ist, sind jedoch potentielle Gefahrstellen vorhanden. Bei diesen Gefahrstellen handelt es sich insbesondere um äußere Ecken des ersten Hindernisses 2 und des zweiten Hindernisses 3. Diese äußeren Ecken werden sich im weiteren Verlauf des Parkvorgangs seitlichen Flanken des Fahrzeugs 1 nähern, so dass eine Gefahr einer Kollision zwischen Fahrzeug 1 und erstem Hindernis 2 und zweiten Hindernis 3 besteht.

Daher erfolgt der Schritt des Feststellens 300 der Annäherung des Fahrzeugs 1 an eines der ermittelten Hindernisse 2, 3 der Umgebung, durch die ein vordefinierter Abstand zu dem Hindernis 2, 3 unterschritten ist. Dies kann insbesondere anhand der Ultraschallsensoren 8 erkannt werden, da ein Abstand zwischen Fahrzeug 1 und Hindernissen 2, 3 abnimmt. Sobald ein solches Annähern des Fahrzeugs 1 erkannt ist und der Abstand zu dem Hindernis 2, 3 den vordefinierten Abstand unterschreitet, ist von einer potentiellen Kollision auszugehen, weswegen der zuvor genannte Schritt des Anzeigens 400 in einer zweiten Darstellung 6, 7 erfolgt.

Durch das Anzeigen 400 der zweiten Darstellung 6, 7 wird der Fahrer explizit vor einer Gefahr des Zusammenstoßes zwischen Fahrzeug und Hindernissen 2, 3 gewarnt. Dabei kann das Anzeigen 400 der zweiten Darstellung 6, 7 auf unterschiedliche Weisen erfolgen.

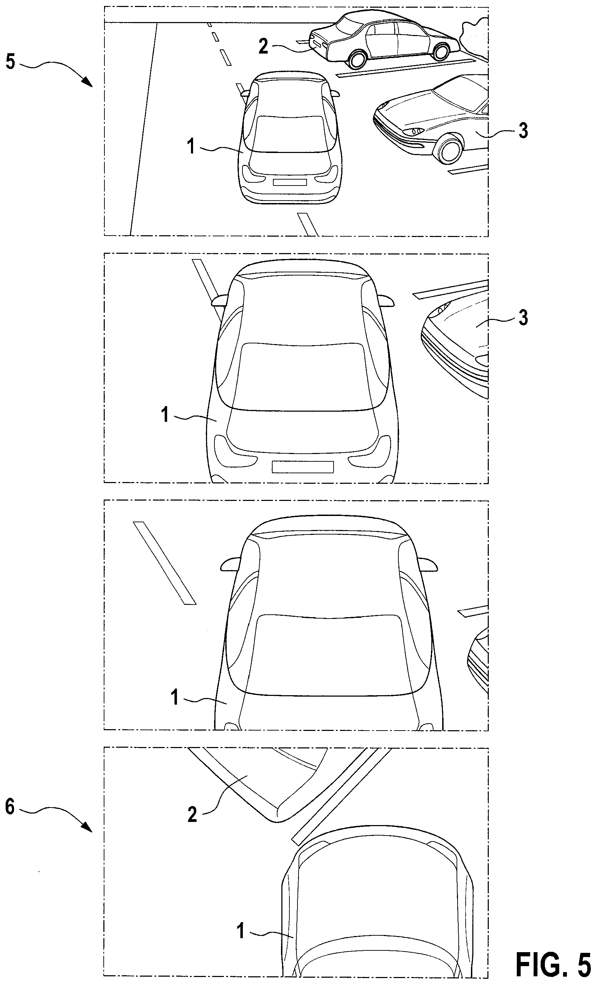

Figur 5 zeigt schematisch eine erste Möglichkeit zum Anzeigen 400 der zweiten Darstellung 6, 7. Dabei erfolgt, ausgehend von der in Figur 3 oder in Figur 4 gezeigten ersten Darstellung 5, eine Änderung einer virtuellen Perspektive sowie einer Änderung eines Zooms von der ersten Darstellung 5 zu der zweiten Darstellung 6. Dies bedeutet, dass die zweite Darstellung 6 aus der ersten Darstellung 5 hervorgeht. In Figur 5 sind einzelne Zwischenbilder des Wechsels von der ersten Darstellung 5 zu der zweiten Darstellung 6 gezeigt, wobei besagter Wechsel bevorzugt eine kontinuierliche Animation ist. Insbesondere wird die erste Darstellung 5 auf der Anzeigevorrichtung 10 dargestellt, indem die erste Darstellung 5 die Anzeigevorrichtung 10 vollständig ausfüllt. Durch den Perspektivwechsel sowie Zoomwechsel füllt daher auch die zweite Anzeige 6 die Anzeigevorrichtung 10 voll aus. Die erste Anzeige 5 ist nicht mehr dargestellt.

Es ist ersichtlich, dass die zweite Darstellung 6, 7 somit einen Ausschnitt aus der ersten Darstellung 5 anzeigt, wobei zusätzlich Perspektive und Zoom geändert sind. Dadurch kann dem Fahrer des Fahrzeugs derjenige Bereich von Umgebung im Fahrzeug 1 angezeigt werden, an dem die Annäherung des Fahrzeugs 1 an das Hindernis 2, 3, 4, in Figur 5 das erste Hindernis 2, stattfindet. Somit wird der Fahrer explizit darauf aufmerksam gemacht, dass sich das Fahrzeug 1 einem Hindernis 2, 3, 4 annähert.

Die in Figur 5 gezeigte Möglichkeit hat jedoch den Nachteil, dass die erste Darstellung 5 nicht mehr sichtbar ist. Dies führt dazu, dass der Fahrer des Fahrzeugs keinen Überblick mehr über die Parksituation hat, da auf der Anzeigevorrichtung 10 ausschließlich die zweite Darstellung 6 angezeigt ist. Dies ist auch dann nachteilig, wenn sich das Fahrzeug 1 mehreren Hindernissen 2, 3, 4 nähert. So ist in der Parksituation gemäß dem Ausführungsbeispiel nicht nur eine Annäherung des Fahrzeugs 1 an das erste Hindernis 2 vorhanden, vielmehr nähert sich das Fahrzeug 1 auch dem zweiten Hindernis 3 an.

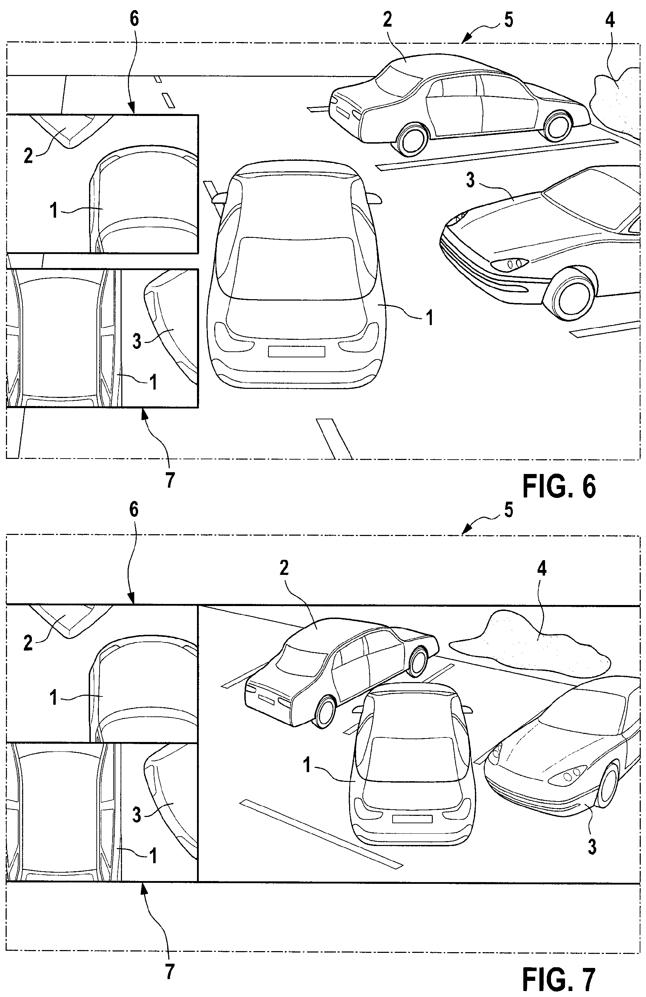

Um den Fahrer des Fahrzeugs 1 weiterhin umfänglich vor sich nähernden Hindernissen 2, 3, 4 warnen zu können, werden somit zwei unterschiedliche zweite Darstellungen 6, 7 angezeigt. Eine der zweiten Darstellungen 6 zeigt die Annäherung des Fahrzeugs 1 an das erste Hindernis 2, während eine andere zweite Darstellung 7 die Annäherung des Fahrzeugs 1 an das zweite Hindernis 3 darstellt. In den Figuren 6 und 7 sind zwei verschiedene Möglichkeiten aufgezeigt, wie die zweiten Darstellungen 6, 7 zusammen mit der ersten Darstellung 5 auf der Anzeigevorrichtung 10 angezeigt werden können. In Figur 6 werden dabei die zweiten Darstellungen 6, 7 der ersten Darstellung 5 überlagert. In Figur 7 werden die erste Darstellung 5 und die zweiten Darstellungen 6, 7 nebeneinander angezeigt. In Figur 6 ist somit ersichtlich, dass die Gefahr eines Informationsverlustes der ersten Darstellung 5 besteht, da durch die Überlagerung mit den zweiten Darstellungen 6, 7 nicht mehr alle Bereiche aus der ersten Darstellung 5 erblickt werden können. Dahingegen erscheinen die zweiten Darstellungen 6, 7 aufgrund deren Darstellung im Vordergrund vor der ersten Darstellung als Mitteilungen mit höherer Priorität, sodass die Aufmerksamkeit des Fahrers gezielt auf die Annäherung an die Hindernisse 2, 3 gelenkt wird. Für das Anzeigen von erster Darstellung 5 und zweiten Darstellungen 6, 7 nebeneinander, wie in Figur 7 skizziert, ist allerdings ein Skalieren notwendig, da die zuvor die gesamte Anzeigevorrichtung 10 einnehmende erste Darstellung 5 nun verkleinert werden muss. Allerdings ist dafür verhindert, dass Informationsverluste bei der Anzeige der ersten Darstellung 5 auftreten.

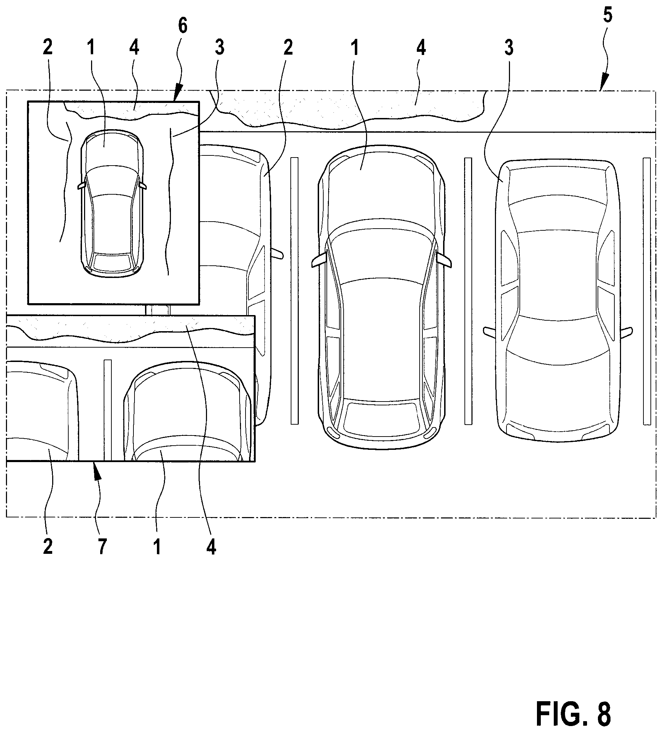

Figur 8 zeigt eine weitere Möglichkeit der kombinierten Anzeige von erster Darstellung 5 und zweiten Darstellungen 6 und 7, die nicht Teil der beanspruchten Erfindung ist. In Figur 8 hat das Fahrzeug 1 seine endgültige Parkposition nahezu erreicht. Somit ist neben dem ersten Hindernis 2 und dem zweiten Hindernis 3 ein drittes Hindernis 4 vorhanden, wobei das dritte Hindernis 4 eine Begrenzungswand darstellt. Somit ist eine Vielzahl von Bereichen vorhanden, an denen sich das Fahrzeug 1 Hindernissen 2, 3, 4 annähert. Daher wird eine zweite Darstellung 6 derart angezeigt, dass lediglich schematische Elemente verwendet werden. Dies bedeutet, dass neben einer Repräsentation des Fahrzeugs 1 die weiteren Hindernisse 2, 3, 4 lediglich schematisch angezeigt werden. In dem in Figur 8 gezeigten Beispiel werden Kanten angezeigt, die eine Kante eines erfassten Hindernisses repräsentieren. Somit erhält der Fahrer des Fahrzeugs 1 eine genaue Übersicht über den Abstand zwischen seinem Fahrzeug 1 und den Hindernissen 2, 3, 4 in der Umgebung des Fahrzeugs 1. Dadurch ist ein Fahren des Fahrzeugs 1 in der Umgebung trotz der Hindernisse 2, 3, 4 sicher und kollisionsfrei möglich. Die weitere zweite Darstellung 7 zeigt weiterhin eine Textur analog zu den zuvor beschriebenen Figuren 6 und 7.

Durch das zuvor beschriebene Verfahren wird somit in Abhängigkeit einer erkannten Annäherung an ein Hindernis 2, 3, 4 eine Anzeige optimiert, um den Fahrer rechtzeitig vor besagter Annäherung zu warnen. Dies führt zu einer erhöhten Sicherheit beim Betrieb des Fahrzeugs 1, da die Gefahr zu Kollisionen mit Hindernissen 2, 3, 4 in der Umgebung verringert ist.

## Patentansprüche

1. Verfahren zum Darstellen einer Umgebung eines Fahrzeugs (1) umfassend die Schritte:
• Erfassen (100) einer Umgebung des Fahrzeugs (1) und Ermitteln von Hindernissen (2, 3, 4) in der Umgebung mittels Umfeldsensoren (8, 9) des Fahrzeugs (1),
• Anzeigen (200) einer ersten Darstellung (5) umfassend eine Repräsentation der Umgebung mit den Hindernissen (2, 3, 4) und eine Repräsentation des Fahrzeugs (1) auf einer Anzeigevorrichtung (10),
• Feststellen (300) einer Annäherung des Fahrzeugs (1) an ein ermitteltes Hindernis (2, 3, 4), durch die ein vordefinierter Abstand zu dem Hindernis (2, 3, 4) unterschritten ist, und
• Anzeigen (400) einer zweiten Darstellung (6, 7) mit einem gegenüber der ersten Darstellung (5) vergrößerten Ausschnitt der Repräsentation der Umgebung mit den Hindernissen (2, 3, 4) und der Repräsentation des Fahrzeugs (1) auf der Anzeigevorrichtung (10), wobei der Ausschnitt denjenigen Bereich der Umgebung und des Fahrzeugs (1) darstellt, an dem die Annäherung des Fahrzeugs (1) an das Hindernis (2, 3, 4) festgestellt wurde, wobei die erste Darstellung (5) und die zweite Darstellung (6, 7) Bilder aus unterschiedlichen virtuellen Perspektiven auf ein dreidimensionales Modell der Umgebung darstellen, wobei das dreidimensionale Modell anhand der erfassten Umgebung und der ermittelten Hindernisse (2, 3, 4) generiert wurde, und wobei die zweite Darstellung (6, 7) durch einen Wechsel der virtuellen Perspektive und einer Veränderung eines Zooms aus der ersten Darstellung (5) erzeugt wird, wobei ein virtueller Kameraschwenk durchgeführt wird, indem dem Fahrer des Fahrzeugs auf der Anzeigevorrichtung eine Animation gezeigt wird, die dem Perspektivenwechsel entspricht.

2. Verfahren nach einem der vorhergehenden Ansprüche, **dadurch gekennzeichnet, dass** die erste Darstellung (5) und die zweite Darstellung (6, 7) separate Darstellungen sind.

3. Verfahren nach Anspruch 2, **dadurch gekennzeichnet, dass** die zweite Darstellung (6, 7) auf der Anzeigevorrichtung (10) derart dargestellt wird, dass diese zumindest einen Teilbereich der ersten Darstellung (5) überlagert.

4. Verfahren nach Anspruch 2, **dadurch gekennzeichnet, dass** die erste Darstellung (5) und die zweite Darstellung (6, 7) nebeneinander auf der Anzeigevorrichtung (10) dargestellt werden.

5. Verfahren nach einem der vorhergehenden Ansprüche, **dadurch gekennzeichnet, dass** in der ersten Darstellung (5) und/oder der zweiten Darstellung (6, 7) die Repräsentation des Hindernisses (2, 3, 4), dem sich das Fahrzeug (1) nähert, hervorgehoben wird.

6. Computerprogrammprodukt umfassend Instruktionen, welche, wenn Sie auf einer Auswerteeinheit ausgeführt werden, die Auswerteeinheit veranlassen, die Schritte des Verfahrens nach einem der vorhergehenden Ansprüche auszuführen.

7. Steuergerät (11) für ein Fahrzeug (1) umfassend zumindest eine Schnittstelle zum Anbinden von Umfeldsensoren (8, 9) und einer Anzeigevorrichtung (10), wobei das Steuergerät (11) eingerichtet ist, ein Verfahren nach einem der Ansprüche 1 bis 5 oder ein Computerprogrammprodukt nach Anspruch 6 auszuführen.

## Claims

1. Method for reproducing an environment of a vehicle (1), comprising the steps of:
• detecting (100) an environment of the vehicle (1) and ascertaining obstacles (2, 3, 4) in the environment by means of environmental sensors (8, 9) of the vehicle (1),
• displaying (200) a first illustration (5) comprising a representation of the environment with the obstacles (2, 3, 4) and a representation of the vehicle (1) on a display device (10),
• determining (300) an approach of the vehicle (1) to an ascertained obstacle (2, 3, 4) by way of which a predefined spacing from the obstacle (2, 3, 4) is undershot, and
• displaying (400) a second illustration (6, 7) with a detail of the representation of the environment with the obstacles (2, 3, 4) and of the representation of the vehicle (1) on the display device (10) that is enlarged in comparison to the first illustration (5), wherein the detail represents that region of the environment and the vehicle (1) where the approach of the vehicle (1) to the obstacle (2, 3, 4) was determined, wherein the first illustration (5) and the second illustration (6, 7) represent images from different virtual perspectives on a three-dimensional model of the environment, wherein the three-dimensional model has been generated based on the detected environment and the ascertained obstacles (2, 3, 4), and wherein the second illustration (6, 7) is generated by a change of the virtual perspective and a change of a zoom from the first illustration (5), wherein virtual camera panning is carried out by showing the driver of the vehicle on the display device an animation corresponding to the change of perspective.

2. Method according to one of the preceding claims, **characterized in that** the first illustration (5) and the second illustration (6, 7) are separate illustrations.

3. Method according to Claim 2, **characterized in that** the second illustration (6, 7) is illustrated on the display device (10) in such a manner that it superimposes at least a sub-region of the first illustration (5).

4. Method according to Claim 2, **characterized in that** the first illustration (5) and the second illustration (6, 7) are shown side by side on the display device (10).

5. Method according to one of the preceding claims, **characterized in that** in the first illustration (5) and/or the second illustration (6, 7) the representation of the obstacle (2, 3, 4) which the vehicle (1) approaches is highlighted.

6. Computer program product comprising instructions which, when executed on an evaluation unit, prompt the evaluation unit to carry out the steps of the method according to one of the preceding claims.

7. Control unit (11) for a vehicle (1), comprising at least one interface for connecting environmental sensors (8, 9) and a display device (10), wherein the control unit (11) is specified to carry out a method according to one of Claims 1 to 5 or a computer program product according to Claim 6.

## Revendications

1. Procédé de représentation d'un environnement d'un véhicule (1), comprenant les étapes suivantes :
• l'acquisition (100) d'un environnement du véhicule (1) et la détection d'obstacles (2, 3, 4) dans l'environnement au moyen de capteurs d'environnement (8, 9) du véhicule (1),
• l'affichage (200), sur un dispositif d'affichage (10), d'une première illustration (5) comportant une représentation de l'environnement avec les obstacles (2, 3, 4) et une représentation du véhicule (1),
• la détermination (300) du fait que le véhicule (1) se rapproche d'un obstacle (2, 3, 4) détecté lorsque la distance de l'obstacle (2, 3, 4) s'abaisse en dessous d'une distance prédéfinie, et
• l'affichage (400), sur le dispositif d'affichage (10), d'une seconde illustration (6, 7) avec une partie de la représentation de l'environnement comprenant les obstacles (2, 3, 4) et la représentation du véhicule (1) agrandie par rapport à la première illustration (5), ladite partie représentant la zone de l'environnement et du véhicule (1) dans laquelle il a été déterminé que le véhicule (1) se rapprochait de l'obstacle (2, 3, 4), la première illustration (5) et la seconde illustration (6, 7) représentant des images prises depuis des perspectives virtuelles différentes sur un modèle tridimensionnel de l'environnement, le modèle tridimensionnel ayant été généré sur la base de l'environnement acquis et des obstacles (2, 3, 4) détectés, et la seconde illustration (6, 7) étant générée par un changement de perspective virtuelle et un changement de zoom par rapport à la première illustration (5), un basculement de caméra virtuel étant réalisé en présentant au conducteur du véhicule sur le dispositif d'affichage une animation correspondant au changement de perspective.

2. Procédé selon l'une des revendications précédentes, **caractérisé en ce que** la première illustration (5) et la seconde illustration (6, 7) sont des illustrations séparées.

3. Procédé selon la revendication 2, **caractérisé en ce que** la seconde illustration (6, 7) est affichée sur le dispositif d'affichage (10) de telle sorte qu'elle se superpose à au moins une zone partielle de la première illustration (5).

4. Procédé selon la revendication 2, **caractérisé en ce que** la première illustration (5) et la seconde illustration (6, 7) sont affichées l'une à côté de l'autre sur le dispositif d'affichage (10).

5. Procédé selon l'une des revendications précédentes, **caractérisé en ce que** la représentation de l'obstacle (2, 3, 4) dont le véhicule (1) se rapproche est mise en évidence dans la première illustration (5) et/ou dans la seconde illustration (6, 7).

6. Produit de programme informatique comprenant des instructions qui, lorsqu'elles sont exécutées sur une unité d'évaluation, amènent l'unité d'évaluation à exécuter les étapes du procédé selon l'une des revendications précédentes.

7. Appareil de commande (11) destiné à un véhicule (1), comprenant au moins une interface permettant de connecter des capteurs d'environnement (8, 9) et un dispositif d'affichage (10), l'appareil de commande (11) étant conçu pour mettre en œuvre un procédé selon l'une des revendications 1 à 5 ou un produit de programme informatique selon la revendication 6.
